# EUROPÄISCHE PATENTSCHRIFT

(11) **EP 0 597 227 B1**
(45) Veröffentlichungstag und Bekanntmachung des Hinweises auf die Patenterteilung: **17.05.1995**
(21) Anmeldenummer: 93115526.1
(22) Anmeldetag: 25.09.1993
(51) Int. Cl.: B29C 70/00, B30B 5/06, B29C 43/22

(54) **Verfahren zur Herstellung von faserverstärktem, thermoplastischem Material und Vorrichtung zur Durchführung des Verfahrens**
Method of making fiber reinforced, thermoplastic material and device for carrying it out
Procédé pour la fabrication d'un matériau thermoplastique renforcé par fibres et appareil

(30) Priorität: 05.10.1992 AT 1962/92
(43) Veröffentlichungstag der Anmeldung: 18.05.1994
(73) Patentinhaber: PCD-Polymere Gesellschaft m.b.H., A-2323 Schwechat-Mannswörth (AT)
(72) Erfinder: Blauhut, Wilfried, Dipl.-Ing., A-4040 Linz (AT); Prokschi, Hermann, A-4231 Untergaisbach (AT); Begemann, Michael, Dr.-Ing., A-4203 Altenberg (AT); Erlacher, Günther, Ing., A-4210 Gallneukirchen (AT); Hasler, Wolfgang, Dipl.-Ing., A-4470 Enns (AT)
(74) Vertreter: Kunz, Ekkehard, Dr.

(56) Entgegenhaltungen:
- EP-A- 0 110 265
- DE-A- 2 425 057
- DE-A- 3 347 877
- PATENT ABSTRACTS OF JAPAN vol. 006, no. 228 (M-171)13. November 1982 & JP-A-57 130 743 (MITSUBISHI JUKOGYO KK)

## Beschreibung

Verbundwerkstoffe aus thermoplastischer Matrix und Verstärkungsfasern, bevorzugt Glasfasern, sind von zunehmendem Interesse in vielen Industriezweigen, speziell in der Automobilindustrie. Besonders interessant sind dabei Materialien, die durch Verformen von plattenförmigem Halbzeug, insbesondere durch Fließpressen, verarbeitet werden. Die bekanntesten Werkstoffe dieser Art sind glasmattenverstärkte Thermoplaste (GMT).

Zur Herstellung derartiger Verbundwerkstoffe werden aus Gründen der Wirtschaftlichkeit bevorzugt Doppelbandpressen verwendet. Eine in wärmetechnischer Hinsicht besonders wirtschaftliche Ausgestaltung des Prozesses ist in der GB 2 040 801 beschrieben, bei der der Thermoplast in geschmolzener Form eingebracht wird. Unbefriedigend bei diesem Verfahren ist aber die Ausbildung des Plattenrandes. Durch das undefinierte Verfließen des Materials am Rand entsteht eine relativ breite Randzone der Platte, an der Glasgehalt und Plattendicke stark schwanken, sodaß ein beträchtlicher Verschnitt entsteht.

In DE-A-33 47 877 ist eine Doppelbandpresse zur Herstellung von Spanplatten, Faserplatten, Sperrholz, Elektrolaminaten oder dergleichen beschrieben, bei der an den Außenkanten der Bänder in einer Nut ein Draht mit derselben Geschwindigkeit wie das Preßgut mitgeführt wird. Bei Verwendung hoher Drücke, etwa bei der Herstellung von GMT aus Thermoplasten, ist diese Seitenabdichtung jedoch nicht zielführend, da der Draht vom Preßgut seitlich hinausgedrückt wird. Außerdem ist im Einlaufbereich der Bänder noch keine Abdichtung durch den Draht gegeben.

In DE-A-29 23 036 ist eine Doppelbandpresse zur Herstellung von mit Stahlseileinlagen verstärkten Gummibändern, die sich als Förderbänder eignen, beschrieben. Zur seitlichen Abdichtung dienen mitlaufende Gummibänder, die durch an den Preßbändern befestigte Bolzen abgestützt werden. Zur Herstellung von Faserverbundwerkstoffen aus einer Thermoplastmatrix und Glasfasermatten wäre eine solche Doppelbandpresse nicht geeignet, da einfache Gummibänder den dort auftretenden thermischen und mechanischen Belastungen nicht gewachsen wären.

Gemäß EP-A-0 484 735 soll das Problem der Seitenabdichtung dadurch gelöst werden, daß seitlich Bänder aus Verstärkungseinlagen enthaltendem Kautschuk mitlaufen. Insbesondere werden Metallgliedernänder vorgeschlagen, die mit Silikonkautschuk beschichtet sind. Bei Druckanstieg weichen die Bänder nach außen aus, wobei allerdings der auf das Preßgut ausübbare Druck durch die mittels Reibung auf die Bänder übertragbare Kraft begrenzt ist. Für die Verpressung unter hohen Drücken, die im Interesse der Produktqualität wünschenswert sind, ist dieses Verfahren daher nicht geeignet.
Da das Band bei Druckschwankungen auch innerhalb der Toleranzgrenze nach außen ausweicht, entsteht ein ungleichmäßiger Rand, der als Verschnitt anfällt.

Unerwarteterweise konnte nun ein einfaches Verfahren zur Herstellung von faserverstärkten, thermoplastischem Material gefunden werden, bei dem die Randverluste sehr gering sind.

Gegenstand der Erfindung ist demnach ein Verfahren zur Herstellung von faserverstärktem, thermoplastischem Material durch Einbringen und Verpressen von Thermoplast und Faserverstärkung in einer heiz- und kühlbaren Doppelbandpresse mit umlaufenden endlosen Stahlbändern mit seitlicher Abdichtung des Preßraumes, das dadurch gekennzeichnet ist, daß mit dem Preßgut ein poröses Profil mitgeführt wird, das gegen seitliches Hinausgedrücktwerden mechanisch abgestützt ist, und in welches Thermoplastschmelze eindringt, die beim Abkühlen erstarrt und zusammen mit dem Profil die eigentliche Dichtung bildet.

Als Thermoplast werden beispielsweise thermoplastische Polyester, Polyethylen, Polyamide oder Polypropylen und dessen Copolymere verwendet. Vorzugsweise werden Polypropylen oder Polyamide verwendet.

Zur Durchführung des Verfahrens wird das thermoplastische Material vorzugsweise mittels einer oder mehrerer Breitschlitzdüsen in geschmolzener Form zwischen zwei oder mehrere Fassermatten oder Gelege extrudiert und mit diesen in die Doppelbandpresse eingebracht und darin verpreßt.
Damit das Preßgut nicht seitlich aus der Presse hinausgedrückt wird, wird der Preßraum seitlich mit Hilfe eines porösen Profils abgedichtet, das mechanisch abgestützt ist, damit es nicht seinerseits seitlich hinausgedrückt wird. Die seitliche Abstützung kann sowohl durch eine mit den Bändern mitlaufende Abstützung als auch durch eine in der Maschine feststehende Abstützung geschehen.

Als seitliche Abdichtung dient ein poröses Profil, das gegebenenfalls vor dem Einführen in die Doppelbandpresse befeuchtet wird. Es kann eine Rundschnur, ein Seil, eine Flechtschnur oder ein Kabel sein, es kann aber auch ein Filz-, Vlies- oder Schaumstreifen sein.
Es kann aus artfremden Material sein, oder artgleich mit dem Thermoplast sein.

Bevorzugt ist das Material der seitlichen Abdichtung artgleich mit den Thermoplasten und bevorzugt ist es mit Wasser befeuchtet. Dem Wasser können zur Verminderung der Grenzflächenspannung geringe Mengen an üblichen grenzflächenaktiven Substanzen, z.B. Tenside, wie sie in handelsüblichen Spülmitteln verwendet werden, beigemischt werden.

Zur Durchführung des Verfahrens wird beispielsweise auf jeder Seite der Presse eine in Wasser getauchte Polypropylenschnur zugeführt, deren ursprünglicher Durchmesser so groß ist, daß sie bereits am Presseneinlauf beide Stahlbänder der Presse berührt und im Zuge des Preßvorganges auf die Höhe des gebildeten faserverstärkten Thermoplasten zusammengedrückt wird. Auf diese Weise wird die seitliche Abdichtung bereits von Beginn des Preßvorganges an wirksam.

Während des Preßvorganges dringt etwas von der am Rande befindlichen Thermoplastschmelze in die verbleibenden Hohlräume des porösen Materials ein und bildet mit diesem zusammen die eigentliche Dichtung. Bevorzugt ist die Verwendung von artgleichem Material, das zusammen mit dem Randbereich des gebildeten faserverstärkten Thermoplasten beim Besäumen abgeschnitten und direkt recycliert werden kann.

Besonders bevorzugt ist es, das poröse Profil mit Wasser zu befeuchten. Berührt die Thermoplastschmelze das poröse befeuchtete Profil, so verdampft Wasser und kühlt dadurch die ankommende Schmelze, die dabei viskoser wird und schließlich erstarrt, wodurch die Dichtwirkung erheblich verbessert wird.

### Beispiel

In eine isobare, hydraulisch gestützte Presse werden 2 Lagen Glasfasermatte mit je 900 g/m² Flächengewicht eingeführt. Zwischen die beiden Glasmatten wird PP-Schmelze in einer Auflage von 2700 g/m² extrudiert. An beiden Seiten wird je ein in einem Wasserbad getränkter Streifen Nadelfilz aus PP-Faser, 6 mm dick, 10 mm breit zugeführt. Zur Stützung des Dichtstreifens dienen seitlich in der Presse feststehend angebrachte Bleche von 3 mm Dicke, die 28 mm weit zwischen die Preßbänder hineinragen. Die Presse wird mit 2 m/min Geschwindigkeit gefahren und in der Reaktionszone mit einem hydraulischen Druck an der Bandrückseite von 25 bar beaufschlagt. Es wird ein quasihomogener Verbundwerkstoff, d. h. ohne Schichtaufbau mit vollständig geschlossener Oberfläche von 3,7 mm Dicke und einer Dichte von 1,20 g/cm³ erhalten.

## Patentansprüche

1. Verfahren zur Herstellung von faserverstärktem, thermoplastischem Material durch Einbringen und Verpressen von Thermoplast und Faserverstärkung in einer heiz- und kühlbaren Doppelbandpresse mit umlaufenden endlosen Stahlbändern mit seitlicher Abdichtung des Preßraumes, dadurch gekennzeichnet, daß mit dem Preßgut ein poröses Profil mitgeführt wird, das gegen seitliches Hinausgedrücktwerden mechanisch abgestützt ist, und in welches Thermoplastschmelze eindringt, die beim Abkühlen erstarrt und zusammen mit dem Profil die eigentliche Dichtung bildet.

2. Verfahren nach Anspruch 1, dadurch gekennzeichnet, daß ein poröses Profil mitgeführt wird, das artgleich mit dem thermoplastischen Material ist.

3. Verfahren nach Anspruch 1, dadurch gekennzeichnet, daß als poröses Profil eine Rundschnur, ein Seil oder eine Flechtschnur mitgeführt wird.

4. Verfahren nach Anspruch 1, dadurch gekennzeichnet, daß als poröses Profil ein Filz-, Vlies- oder Schaumstreifen mitgeführt wird.

5. Verfahren nach Anspruch 1, dadurch gekennzeichnet, daß das mitgeführte poröse Profil vor dem Einführen in die Doppelbandpresse mit Wasser befeuchtet wird.

6. Verfahren nach Anspruch 1, dadurch gekennzeichnet, daß die Faserverstärkung vor dem Eintritt in die Presse seitlich befeuchtet wird und dadurch ein poröses, mit Wasser befeuchtetes Profil darstellt.

## Claims

1. Process for producing fibre-reinforced thermoplastic material by introducing and pressing thermoplastic and fibre reinforcement in a heatable and coolable double-belt press with circulating endless steel belts with lateral sealing of the press space, characterized in that the material being pressed is transported together with a porous profile which is mechanically supported against being pressed out laterally and into which penetrates a thermoplastic melt which solidifies on cooling and, together with the profile, forms the actual seal.

2. Process according to Claim 1, characterized in that the porous profile is of the same kind as the thermoplastic material.

3. Process according to Claim 1, characterized in that the porous profile is a round cord, a rope or a braided cord.

4. Process according to Claim 1, characterized in that the porous profile is a strip of felt, non-woven fabric or foam.

5. Process according to Claim 1, characterized in that the porous profile is moistened with water before it is introduced into the double-belt press.

6. Process according to Claim 1, characterized in that the fibre reinforcement is moistened laterally before it enters the press and thereby represents a porous profile moistened with water.

## Revendications

1. Procédé de fabrication d'un matériau thermoplastique renforcé avec des fibres, grâce à l'introduction et au formage d'un thermoplaste et du renfort de fibres dans une presse à double bande, pouvant être chauffée et refroidie, comportant des bandes d'acier périphériques sans fin, avec une étanchéification latérale de l'espace de compression, caractérisé en ce qu'un profilé poreux est entraîné avec le produit à presser, lequel profilé est protégé mécaniquement contre une poussée latérale, et dans lequel pénètre un thermoplaste fondu qui durcit par refroidissement et forme l'étanchéité proprement dite, conjointement avec le profilé.

2. Procédé selon la revendication 1, caractérisé en ce qu'un profilé poreux est entraîné conjointement, qui est du même type que le matériau thermoplastique.

3. Procédé selon la revendication 1, caractérisé en ce que le profilé poreux qui est entraîné conjointement est un cordon rond, un câble ou un cordon tressé.

4. Procédé selon la revendication 1, caractérisé en ce que le profilé poreux qui est entraîné conjointement est une bande de feutre, de non-tissé ou de mousse.

5. Procédé selon la revendication 1, caractérisé en ce que le profilé poreux qui est entraîné conjointement est humidifié avec de l'eau avant d'être introduit dans la presse à double bande.

6. Procédé selon la revendication 1, caractérisé en ce que le renfort de fibres est humidifié latéralement avant d'être introduit dans la presse et, de ce fait, représente un profilé poreux humidifié avec de l'eau.
